# EUROPÄISCHE PATENTANMELDUNG

(11) **EP 2 863 347 A1**
(43) Veröffentlichungstag der Anmeldung: **22.04.2015**
(21) Anmeldenummer: 13188857.0
(22) Anmeldetag: 16.10.2013
(51) Int. Cl.: G06Q 10/08, G06Q 50/32, G07F 17/12

(54) **System und Verfahren für den Versand von Postsendungen**

(71) Anmelder: Integer.pl S.A., 30-624 Krakow (PL)
(72) Erfinder: Gruca, Krzysztof, 30-611 Kraków (PL)
(74) Vertreter: Kilchert, Jochen

(57) **Zusammenfassung**

Erfindungsgemäß soll der Versand von Postsendungen erleichtert werden. Diese Aufgabe wird durch ein System gelöst, das umfasst:
- mindestens eine Auftragsverwaltungseinrichtung (53) zum Empfangen einer Anfrage eines Servicesystems (80), zur Generierung eines ersten Versandauftrags und zur Generierung eines Authentifizierungscodes (A-Code) und/oder Aktivierung eines Authentifizierungscodes (A-Code);
- mindestens eine Kommunikationseinrichtung (52, 57) zur Übermittlung des Authentifizierungscodes (A-Code) an das Servicesystem (80) und/oder an einen Endkunden;
- eine Vielzahl von Paketautomaten (20, 20') mit mindestens einer Eingabeeinrichtung (21) und/oder Erfassungseinrichtung (29) zur Eingabe bzw. Erfassung des Authentifizierungscodes (A-Code) und einer Vielzahl von Paketfächern (30) zur Aufnahme eines Produkts, z.B. eines defekten elektronischen Geräts. Die Erfindung zeichnet sich ferner dadurch aus, dass die Auftragsverwaltungseinrichtung (53) dazu ausgebildet ist, eine Auftragsaktualisierung (UP) zu Empfangen und in Reaktion auf die Auftragsaktualisierung (UP) einen zweiten Versandauftrag, insbesondere unter Verwendung des Authentifizierungscodes (A-Code), zu generieren.

## Beschreibung

Die vorliegende Erfindung betrifft ein System und Verfahren für den Versand von Postsendungen.

Paketautomaten für das Versenden und Empfangen von Postsendungen, beispielsweise Briefe oder Pakete, sind hinreichend bekannt. Üblicherweise umfassen entsprechende Paketautomaten eine Vielzahl von Paketfächern zum Einlagern/ Deponieren von Postsendungen bis zu deren Abholung und einen Terminal mit Eingabe- und Ausgabeeinrichtungen. Beispielsweise kann ein Bildschirm und eine Tastatur vorgesehen werden. Des Weiteren kann das Terminal einen Barcodescanner aufweisen, der es ermöglicht an den Postsendungen angebrachte Kennzeichnungen, beispielsweise Barcodelabels, zu erfassen.

Ein üblicher Deponierungs-/Aufgabevorgang einer Postsendung umfasst mehrere Schritte. Der Benutzer/Kunde muss zunächst zuhause an einem Computer einen Adressaufkleber mit entsprechendem Barcode generieren und ausdrucken. Häufig erfolgt gleichzeitig mit der Generierung des Adressaufklebers die Abrechnung der Dienstleistung. Hierfür ist es häufig notwendig, dass der Benutzer die Größe des Pakets angibt. Danach klebt der Benutzer den Adressaufkleber auf das Paket, sucht einen Paketautomaten auf und scannt den Barcode ein. Daraufhin öffnet der Paketautomat ein Paketfach, in das die Postsendung eingelegt wird. Der Benutzer schließt das Paketfach und der Paketautomat aktualisiert den Status des am Computer erstellten Versandauftrags. Im Verlauf des Versendens der Postsendung ermöglicht es die Paketidentifikationskennung zu jedem Zeitpunkt die zugehörigen Empfängerdaten (z.B. Name, Straße, Hausnummer, Postleitzahl, Ort, Land) oder eine Zieladresse (z.B. eine Identifikationsnummer eines Paketautomaten) und gegebenenfalls auch die Absenderdaten (z. B. Name, Straße, Hausnummer, Postleitzahl, Ort, Land) abzufragen.

Für den Transport der Postsendungen besuchen Kuriere/Paketabholer die einzelnen Paketautomaten regelmäßig und entnehmen aufgegebene Postsendungen für den weiteren Transport. Üblicherweise authentisiert sich der Kurier an einem Paketautomaten und entnimmt dann alle zur Abholung hinterlegten Postsendungen.

Meist deponiert der Paketabholer gleichzeitig andere Postsendungen, die zu dem entsprechenden Paketautomaten versandt wurden. Auch hierfür ist es notwendig, dass sich der Kurier an dem Paketautomaten authentisiert und dann einen Deponiermodus auswählt. In dem Deponiermodus werden üblicherweise die Kennzeichnungen an den Postsendungen gescannt und dann in ein passendes Paketfach eingelegt, das daraufhin verschlossen wird. Ein entsprechendes Verfahren für das Deponieren von Sendungen wird in der DE 103 01 137 A1 beschrieben. Soweit der Kurier bereits authentisiert ist, kann auf eine erneute Authentisierung verzichtet werden.

Das bereits erläuterte Verfahren zum Aufgeben von Postsendungen ist aufwendig. Insbesondere ist es nicht dazu geeignet von einem mobilen Gerät ausgeführt zu werden.

Des Weiteren ist das erläuterte Verfahren für die Durchführung von Serviceaufträgen (z.B. Reparatur, Wartung) an Produkten, z.B. Laptops, Mobilfunktelefonen, Textilien, Schmuck, Uhren, usw., aufwändig, da für derartige Serviceaufträge üblicherweise zwei Versandaufträge durchgeführt werden müssen:
a) Versand des Produkts vom Inhaber (im Weiteren Endkunde) zur Servicestelle (erster Versand);
b) Versand des Produkts von der Servicestelle zu dem Endkunden (zweiter Versand), z.B. nach der Durchführung des Serviceauftrags.

Für die Durchführung des jeweiligen Versands müssen die notwendigen Daten, Empfänger und Absender jeweils erneut eingegeben werden. In dieser Konstellation soll häufig zumindest der erste Versand für den Endkunden kostenlos erfolgen. Die Umsetzung dieser Anforderung ist nicht immer einfach zu bewerkstelligen. Des Weiteren müssen anfallende Servicegebühren zuverlässig abgerechnet werden. All diese Anforderungen erfordern oft die Eingabe einer Vielzahl von Daten.

Ausgehend von dem beschriebenen Stand der Technik ist es Aufgabe der vorliegenden Erfindung ein verbessertes System und Verfahren für den Versand von Postsendungen anzugeben. Insbesondere sollen das System und das Verfahren effizienter sein und die Interaktion mit dem Versandsystem für den Endkunden und/oder die Servicestelle vereinfachen.

Diese Aufgabe wird durch ein System gemäß dem Anspruch 1 sowie durch ein Verfahren gemäß dem Anspruch 13 gelöst.

Insbesondere wird die Aufgabe durch ein System für den Versand von Postsendungen gelöst, wobei das System umfasst:
- mindestens eine Auftragsverwaltungseinrichtung zum Empfangen einer Anfrage eines Servicesystems, zur Generierung eines ersten Versandauftrags und zur Generierung eines Authentifizierungscodes und/oder Aktivierung eines Authentifizierungscodes;
- mindestens eine Kommunikationseinrichtung zur Übermittlung des Authentifizierungscodes an das Servicesystem und/oder an einen Endkunden;
- eine Vielzahl von Paketautomaten mit mindestens einer Eingabeeinrichtung und/oder Erfassungseinrichtung zur Eingabe bzw. Erfassung des Authentifizierungscodes und einer Vielzahl von Paketfächern zur Aufnahme eines Produkts, z.B. eines defekten elektronischen Geräts,
wobei die Auftragsverwaltungseinrichtung dazu ausgebildet ist, eine Auftragsaktualisierung zu Empfangen und in Reaktion auf die Auftragsaktualisierung einen zweiten Versandauftrag, insbesondere unter Verwendung des Authentifizierungscodes (A-Code), zu generieren.

Ein wesentlicher Gedanke der vorliegenden Erfindung besteht darin, das Abwickeln von Serviceaufträgen zu vereinfachen. Hierfür wird ein Authentifizierungscode generiert, der es dem Benutzer eines solchen Systems ermöglicht, sich oder das zu versendende Paket zu authentifizieren und dann das Paket mit dem Produkt zu versenden. In einer bevorzugten Ausführungsform wird aus den bereits vorhandenen Daten ein Rücksendeauftrag (Versand des Produkts von der Servicestelle zu dem Endkunden) generiert. Im Weiteren wird dieser Rücksendeauftrag als zweiter Versandauftrag bezeichnet. Insofern ist es möglich, dass ein Benutzer des Systems ein beispielsweise defektes Produkt relativ einfach zum Versand an eine Servicestelle aufgibt und später von der Servicestelle in repariertem Zustand zurückerhält. In einem Ausführungsbeispiel umfasst die Anfrage an die Auftragsverwaltungseinrichtung eine E-Mail und/oder eine Mobilfunknummer, wobei das System dazu ausgebildet ist, den Authentifizierungscode (A-Code) per Textnachricht und/oder per E-Mail an den Endkunden zu kommunizieren. Erfindungsgemäß kann der Authentifizierungscode (A-Code) auch auf einer Webseite angezeigt werden.

Das System kann eine Programmschnittstelle (API) bereitstellen, um es der Servicestelle zu ermöglichen, Authentifizierungscodes abzufragen und/oder zu aktivieren. Die Authentifizierungscodes können dann in jeder beliebigen Form, vorzugsweise elektronisch, an den Endkunden weitergegeben werden.

In einem Ausführungsbeispiel werden die E-Mail-Adresse und/oder die Mobilfunknummer in Verbindung mit dem Authentifizierungscode und/oder der Anfrage- und/oder einer Serviceauftrags-Identifikationsnummer gespeichert.

Das System kann optional eine Rücksendenummer oder RMA-Nummer speichern, um einen bestimmten Vorgang, umfassend den ersten und zweiten Versandauftrag, zu identifizieren. Die RMA-Nummer kann in einem optionalen Feld in der Datenbank gespeichert und einem bestimmten Authentifizierungscode zugeordnet sein.

Es ist denkbar, dass der Authentifizierungscode dem Endkunden verbal kommuniziert wird. In einem bevorzugten Ausführungsbeispiel erfolgt diese Kommunikation mittels einer elektronischen Nachricht, beispielsweise einer Textnachricht oder per E-Mail. Theoretisch ist es möglich, den Authentifizierungscode, der dann in elektronischer Form vorliegt, auszudrucken und unmittelbar auf einem Paket mit dem Produkt als Paket-Identifikationskennung aufzubringen. Alternativ kann der Authentifizierungscode dazu dienen, den Endkunden an einem beliebig von ihm gewählten Paketautomaten zu authentifizieren. Auch in diesem Fall ist es vorteilhaft, wenn der Authentifizierungscode in Textform vorliegt. Gegebenenfalls ist es denkbar, dass der jeweilige Paketautomat eine Erfassungseinrichtung umfasst, die es ermöglicht, den Authentifizierungscode direkt von einem die Textnachricht und/oder E-Mail empfangenden Gerät auszulesen. Beispielsweise kann der Authentifizierungscode von diesem Gerät per Bluetooth übertragen werden. Alternativ ist es denkbar, den jeweiligen Paketautomaten mit einer Bilderfassungseinrichtung auszustatten, die den auf dem Display/der Anzeige des empfangenden Geräts angezeigten Authentifizierungscode einlesen kann. In diesem Zusammenhang kann es von Vorteil sein, wenn der Authentifizierungscode ein maschinenlesbarer Code, beispielsweise ein QR-Code oder ein Barcode ist.

In einer Ausführungsform wird das Produkt, soweit keine abweichenden Eingaben erfolgen, mittels des zweiten Versandauftrags an den Paketautomaten gesandt, an dem es ursprünglich aufgegeben wurde (erster Versandauftrag).

Zusätzlich kann das System dazu ausgebildet sein, eine Textnachricht und/oder eine E-Mail an den Endkunden zu versenden, um diesen aufzufordern, eine Zieladresse für den zweiten Versandauftrag einzugeben. Weiterhin kann das System dazu ausgebildet sein, die Zieladresse in Verbindung mit dem zweiten Versandauftrag nach deren Eingabe zu speichern. Das erfindungsgemäße System ermöglicht es der Servicestelle, von einer konkreten Vorgabe der Zieladresse abzusehen. Vielmehr reicht es aus, eine Kommunikationsmöglichkeit mit dem Endkunden bereitzustellen, so dass das System automatisch die entsprechende Zieladresse ermitteln kann. In diesem Zusammenhang ist es denkbar, zu einer bestimmten E-Mail-Adresse und/oder einer bestimmten Mobilfunknummer eine bevorzugte Zieladresse zu hinterlegen. Diese Daten können von dem Endkunden gepflegt werden. Alternativ kann das System mit dem Endkunden über die angegebene E-Mail-Adresse und/oder Mobilfunknummer Kontakt aufnehmen und eine bevorzugte Zieladresse, an die der zweite Versandauftrag gerichtet ist, erfragen. Insofern wird der Logistikprozess für die Servicestelle erheblich erleichtert.

In einem Ausführungsbeispiel kann das System dazu ausgebildet sein, Daten zu speichern, die den Paketautomaten angeben, in dem das Produkt ursprünglich eingelegt wurde. Diese Daten können dazu verwendet werden, um eine Zieladresse zu ermitteln. Theoretisch ist es möglich, diese automatisch ermittelte Zieladresse dem Endkunden als eine von vielen Auswahlmöglichkeiten anzubieten.

In einem Ausführungsbeispiel enthält der Authentifizierungscode einen Service-Identifikationscode. Dieser Service-Identifikationscode kann eine bestimmte Servicestelle bezeichnen. Es ist denkbar, unter Berücksichtigung von gespeicherten Daten die Zieladresse für den ersten Versandauftrag und somit für den ersten Versand auf Basis des Authentifizierungscodes abzuleiten. Insofern kann eine Zieladresse auch ohne einen Zugriff auf die im System gespeicherte Anfrage ermittelt werden.

Zusätzlich oder alternativ kann der Authentifizierungscode einen Sicherheitscode zur Prüfung der Authentizität des Authentifizierungscodes umfassen. Der Sicherheitscode kann eine Transaktionsnummer aus einer Vielzahl von vorab generierten Transaktionsnummern und/oder einen mittels eines Schlüssels durch die Servicestelle bzw. das Servicesystem generierten Freigabecode umfassen. Insofern kann der Sicherheitscode die Funktion einer Wertmarke oder etwas Ähnlichem übernehmen. Der Sicherheitscode stellt also sicher, dass es jemanden gibt, der für den jeweiligen Versand zuständig ist und die diesbezüglichen Kosten ggf. übernimmt. Entsprechende Transaktionsnummern können in ähnlicher Weise generiert werden, wie dies im Bereich des Online-Banking bekannt ist. Alternativ oder zusätzlich können die jeweilige Servicestelle und/oder das System zum Versand mit einem Algorithmus ausgestattet sein, der es ermöglicht, einen entsprechenden Freigabecode zu generieren.

In diesem Zusammenhang ist es hilfreich, wenn der Authentifizierungscode eine Prüfsumme zur Prüfung der Integrität des Authentifizierungscodes umfasst. Das heißt, die Prüfsumme kann beispielsweise dafür eingesetzt werden, um sicherzustellen, dass bei einem generierten Authentifizierungscode nicht nachträglich der Service-Identifikationscode und/oder ein anderer Bestandteil des Authentifizierungscodes geändert wird.

In einem Ausführungsbeispiel umfasst das System eine Validierungseinrichtung, die dazu ausgebildet ist, nach der Eingabe des Authentifizierungscodes an einer der Vielzahl von Paketautomaten den eingegebenen Authentifizierungscode zu validieren. In diesem Ausführungsbeispiel dient der Authentifizierungscode zumindest zur Authentifizierung des Endkunden, der das Paket mit dem Produkt in ein Paketfach des Paketautomaten einlegt. Zusätzlich kann der Authentifizierungscode zur eindeutigen Identifikation des Pakets dienen.

Der Paketautomat kann dazu ausgebildet sein, in Abhängigkeit von dem Validierungsergebnis der Validierungseinrichtung ein Paketfach zum Einlegen des Produkts zu öffnen.

In einem Ausführungsbeispiel erfolgt eine Zuordnung eines Pakets zu dem ersten Versandauftrag und/oder zu dem Authentifizierungscode in einer Speichereinrichtung, wobei der Paketautomat diese Zuordnung speichert. Im Endeffekt kann somit das Produkt bzw. das Paket mit dem Produkt ohne größeren Aufwand auf der Seite des Endkunden versandt werden. Es ist nicht notwendig, dass auf das Paket oder das Produkt eine Kennzeichnung, beispielsweise ein Aufkleber mit einer Paket-Identifikationskennung aufgebracht wird.

Der Paketautomat kann dazu ausgebildet sein, eine Eingabe zu empfangen, die angibt, ob ein in ein Paketfach eingelegtes Paket bzw. eingelegte Postsendung mit einer Kennzeichnung mit einer Paket-Identifikationskennung versehen ist. Bei dieser Paket-Identifikationskennung kann es sich beispielsweise um den Authentifizierungscode handeln. Die Eingabe kann in Abhängigkeit von dem Paketfach gespeichert werden. Eine entsprechende Speicherung kann lokal innerhalb eines Speichers des Paketautomaten erfolgen oder zentral beispielsweise auf einem Server, der für den Versand der Pakete bzw. Postsendungen zuständig ist. Diese Ausführungsform hat den Vorteil, dass der Endkunde ohne die Verwendung eines Druckers seine Postsendung bzw. sein Produkt abgeben kann. Die Zuordnung des Versandauftrags zu einer bestimmten Paket-Identifikationskennung kann in diesem Fall durch den Kurier erfolgen, der beispielsweise beim Abholen des Pakets dieses in entsprechender Weise kennzeichnet. Es ist möglich, dass der Kurier, der ggf. auch für die Beförderung des Pakets zuständig ist, eine temporäre PaketIdentifikation und/oder den bereits beschriebenen Authentifizierungscode aufbringt. Beispielsweise ist es denkbar, dass der Kurier eine Vielzahl von BarcodeLabels mit entsprechenden Paket-Identifikationskennungen zum Abholen der Postsendungen mitbringt und diese beim Entnehmen der Postsendung aufklebt. Danach muss die Paket-Identifikationsnummer auf der Postsendung an das System kommuniziert werden. Es ist denkbar, eine Eingabeeinrichtung, beispielsweise eine Tastatur zu verwenden. Vorzugsweise wird eine Erfassungseinrichtung, beispielsweise eine Barcode-Leseeinrichtung, verwendet, die sich vorzugsweise am Paketautomaten befindet.

Das System kann eine Bezahleinrichtung zum Bezahlen einer Servicegebühr umfassen. In einem Ausführungsbeispiel kann diese Bezahleinrichtung unmittelbar an dem Paketautomaten vorgesehen werden, so dass ein eine Postsendung abholender Endkunde unmittelbar eine Zahlung vornehmen kann. Andererseits kann die Bezahleinrichtung auch als zentraler Dienst für eine Vielzahl von Paketautomaten implementiert sein. Unabhängig hiervon kann der Bezahlzustand einen Einfluss auf die Durchführung des zweiten Versandauftrags haben. Beispielsweise kann das System so ausgebildet sein, dass der zweite Versandauftrag erst dann ausgeführt wird, wenn eine entsprechende Bezahlung eingegangen ist. Hierdurch ist es möglich, dass die Servicestelle den Eingang von einer Bezahlung der durchgeführten Serviceleistungen nicht selbst kontrollieren und überwachen muss. Diese Aufgabe kann effektiv von dem Versandsystem übernommen werden. Ob für einen Versand, insbesondere den zweiten Versand, eine Gebühr zu entrichten ist und ob zusätzliche Gebühren, z.B. für die Reparatur, anfallen, entscheidet die Servicestelle. Insofern ist das System in einem Ausführungsbeispiel dazu ausgebildet, eine entsprechende Eingabe von der Servicestelle zu empfangen und zu verarbeiten.

Es ist denkbar, dass ein Paketautomat so ausgebildet ist, dass er ein Paketfach mit dem Produkt erst dann öffnet, wenn der Endkunde die Serviceleistung bzw. eine entsprechende Servicegebühr entrichtet hat.

Die oben genannte Aufgabe wird des Weiteren durch ein Verfahren gelöst, das die folgenden Schritte umfasst:
a) Erfassung und Speichern eines Serviceauftrags für ein Produkt, wobei der Serviceauftrag Absenderdaten, insbesondere eine Mobilfunktelefonnummer und/oder eine E-Mailadresse, umfasst;
b) Generierung eines Authentifizierungscodes und/oder Zuordnung eines Authentifizierungscodes zu dem Serviceauftrag;
c) Entgegennahme des Produkts in einem ersten Paketfach;
d) Durchführung eines ersten Versands des Produkts gemäß einem ersten Versandauftrag;
e) Erfassung einer Durchführung des Serviceauftrags;
f) Generierung eines zweiten Versandauftrags unter Verwendung der Absenderdaten des Serviceauftrags;
g) Durchführung des zweiten Versandauftrags und Einlagerung des Produkts oder eines Ersatzprodukts in ein zweites Paketfach;
f) Übermittlung einer elektronischen Nachricht, insbesondere per Kurzmitteilung und/oder E-Mail, unter Verwendung der Absenderdaten, um einen Endkunden über die Einlagerung des Produkts oder eines Ersatzprodukts in das zweite Paketfach zu informieren.

In einem Ausführungsbeispiel wird dieses Verfahren von einem System durchgeführt, wie dies vorab beschrieben wurde. Es ist denkbar, zur Durchführung des Verfahrens nur einzelne Komponenten des vorab beschriebenen Systems zu übernehmen.

Das Verfahren hat im Wesentlichen ähnliche Vorteile, wie diese bereits in Verbindung mit dem System beschrieben wurden. Insbesondere erleichtert das Verfahren die Durchführung eines Serviceauftrags, da mit relativ geringem Aufwand ein Produkt zur Servicestelle gesandt und von dieser wieder zurück zum Endkunden transportiert werden kann. Sowohl die Generierung des ersten und/oder zweiten Versandauftrags wie auch die hierfür notwendigen Prozesse werden vereinfacht. So kann beispielsweise ein Endkunde einfach bei einer Servicestelle anrufen und mitteilen, dass ein bestimmtes Produkt defekt ist. Hieraufhin wird ein Authentifizierungscode generiert und an den Endkunden kommuniziert. Theoretisch ist es denkbar, einen bereits generierten Authentifizierungscode zu aktivieren. Mit dem Authentifizierungscode ist es dem Endkunden möglich, in sehr einfacher Weise das Produkt, beispielsweise als Paket, in einem Paketfach zu deponieren. Der generierte Authentifizierungscode kann zu einem späteren Zeitpunkt für den Rückversand des Pakets bzw. des Produkts an den Endkunden verwendet werden. Theoretisch ist es somit denkbar, das Produkt während des ersten und zweiten Versands mit einer einzigen Codierung, nämlich dem Authentifizierungscode zu kennzeichnen. Eine Statusangabe innerhalb des Versandsystems liefert die weiteren notwendigen Informationen bezüglich Zieladresse und ggf. Absenderadresse.

Die genannte Aufgabe wird des Weiteren durch ein computerlesbares Medium gelöst, das Instruktionen zur Implementierung des beschriebenen Verfahrens enthält.

Weitere vorteilhafte Ausführungsformen ergeben sich anhand der Unteransprüche.

Nachfolgend wird die Erfindung mittels mehrerer Ausführungsbeispiele beschrieben, die anhand von Abbildungen näher erläutert werden. Hierbei zeigen:
- Fig. 1: ein Versandsystem, das kommunikativ mit einem Mobiltelefon und einem Servicestellenserver verbunden ist;
- Fig. 2: Komponenten eines Paketautomaten, wie er in dem Versandsystem gemäß Fig. 1 enthalten ist;
- Fig. 3: Komponenten eines Versandservers, wie er in dem Versandsystem gemäß Fig. 1 enthalten ist;
- Fig. 4: ein erstes Aktivitätsdiagramm, das den Nachrichtenaustausch in einem ersten erfindungsgemäßen Ausführungsbeispiel zeigt;
- Fig. 5: ein zweites Aktivitätsdiagramm, das den Nachrichtenaustausch in einem zweiten erfindungsgemäßen Ausführungsbeispiel zeigt;
- Fig. 6: ein drittes Aktivitätsdiagramm, das den Nachrichtenaustausch in einem dritten erfindungsgemäßen Verfahren zeigt;
- Fig. 7: eine Auftragsdatentabelle;
- Fig. 8: eine Paketfachzuordnungstabelle; und
- Fig. 9: eine Benutzertabelle.

In der nachfolgenden Beschreibung werden für gleiche und gleich wirkende Teile dieselben Bezugsziffern verwendet.

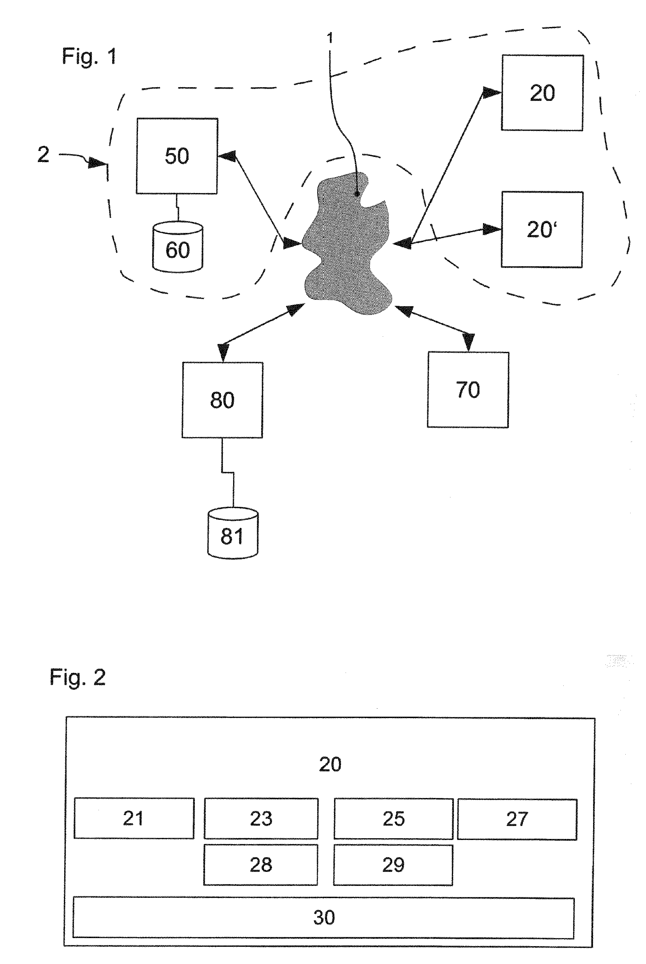

Fig. 1 zeigt ein erfindungsgemäßes System, bei dem ein Versandserver 50 mit einer Vielzahl von Paketautomaten 20, 20' kommunikativ verbunden ist. In der gezeigten Ausführungsform erfolgt die kommunikative Verbindung über ein öffentliches Netzwerk 1. Es ist denkbar, für die Kommunikation ein dediziertes Netzwerk, beispielsweise eine Verbindung per GSM oder eine Mischung aus dedizierten und öffentlichen Netzwerken zu verwenden. Gemäß der Fig. 1 verfügt der Versandserver 50 über eine Versandserverdatenbank 60. Des Weiteren sind eine Vielzahl von internetfähigen Geräten, beispielsweise ein internetfähiges Mobilfunktelefon 70 mit dem Netzwerk verbunden. Alternativ ist es denkbar, dass das Mobilfunktelefon 70 nicht internetfähig ist und neben der Möglichkeit zur verbalen Kommunikation lediglich Kurzmitteilungen (SMS) empfangen kann.

Die Paketautomaten 20, 20`, die Versandserverdatenbank 60 und der Versandserver 50 können logisch als ein Versandsystem zusammengefasst werden, das dazu geeignet ist, den Transport von Paketen von einem ersten Paketfach 30 eines ersten Paketautomaten 20 zu einem zweiten Paketfach 30 eines zweiten Paketautomaten 20' zu gewährleisten. Genauer gesagt umfasst das Versandsystem 2 zumindest die digitale Infrastruktur, um einen entsprechenden Versand zu gewährleisten.

In den nachfolgend beschriebenen Ausführungsbeispielen kommuniziert ein Endkunde über das Mobilfunktelefon 70 mit dem Versandserver 50 und/oder mit dem Servicestellenserver 80. Es ist jedoch denkbar, dass das Mobilfunktelefon 70 unmittelbar mit einem Paketautomaten 20, 20' kommuniziert, um beispielsweise Nachrichten von diesem zu empfangen oder Daten diesen zu übermitteln.

In einem Ausführungsbeispiel ist der erste Paketautomat 20 (Fig. 2) mit einer Eingabeeinrichtung 21, beispielsweise einer Tastatur, einer Ausgabeeinrichtung 23, beispielsweise einem Monitor, einer Verarbeitungseinrichtung 25 und einer Kommunikationseinrichtung 27 zur Kommunikation mit dem Versandserver 50 ausgestattet. Des Weiteren können eine Speichereinrichtung 28 und ein Barcodescanner 29 vorgesehen sein, wobei der Barcodescanner 29 alle oder einige Funktionen der bereits genannten Eingabeeinrichtung 21 übernehmen kann. Ebenso kann eine Eingabeeinrichtung 20 in Form beispielsweise einer Tastatur einige oder alle der nachfolgend beschriebenen Aufgaben des Barcodescanners 29 übernehmen. Schließlich hat der Paketautomat 20 noch eine Vielzahl von Paketfächern 30, die sich über entsprechende Aktuatoren automatisch öffnen lassen.

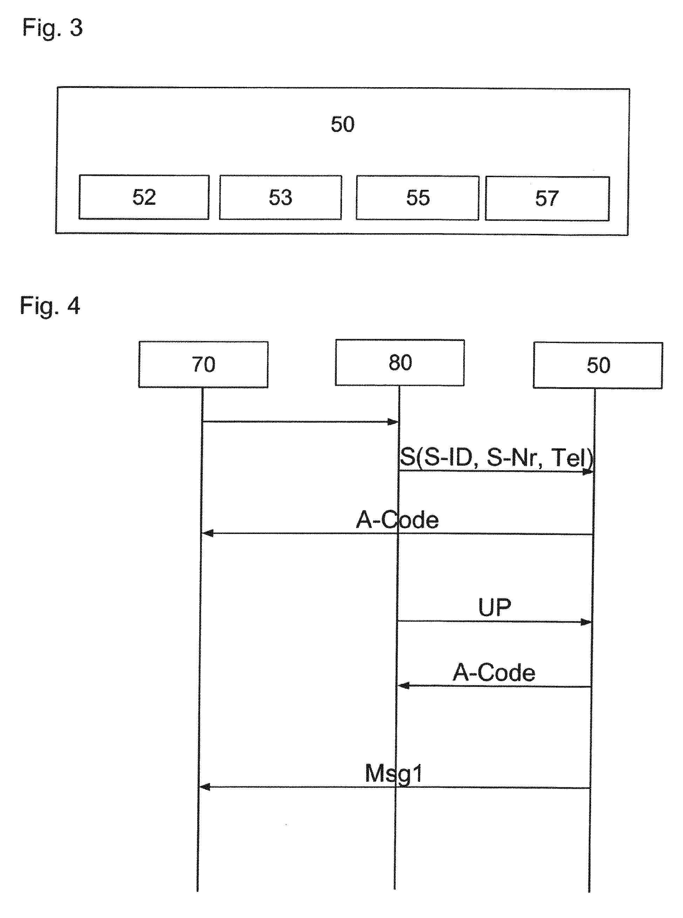

Die Fig. 3 zeigt einige Komponenten des Versandservers 50, der wie bereits erläutert, Zugriff auf die Versandserverdatenbank 60 hat. In entsprechender Weise verfügt der Servicestellenserver 80 über einen Zugriff auf eine Servicestellendatenbank 81. Bei den Komponenten des Versandservers 50 handelt es sich um ein SMS-Gateway 52, eine Auftragsverwaltungseinrichtung 53, eine Serververarbeitungseinrichtung 55 und eine Server-Kommunikationseinrichtung 57. Die Server-Kommunikationseinrichtung 57 ist dazu ausgebildet, über das Netzwerk 1 mit anderen Systemen, beispielsweise dem Paketautomaten 20, 20`, dem Mobilfunktelefon 70 und/oder dem Servicestellenserver 80 zu kommunizieren.

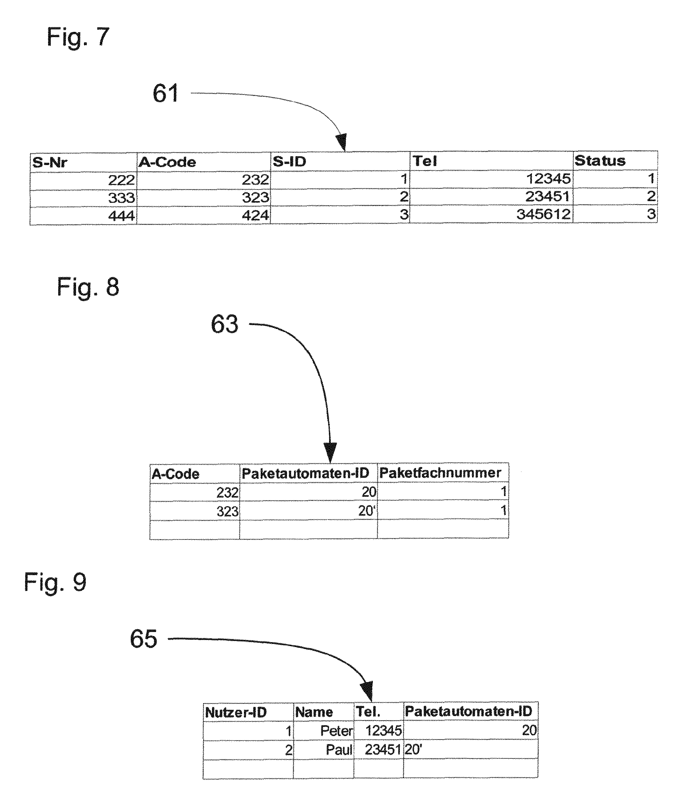

Der Versandserver 50 kann dazu ausgebildet sein, für den Versand eines Pakets wichtige Informationen zentral in der Serverdatenbank 60 zu speichern. In einem Ausführungsbeispiel enthält die Versandserverdatenbank 60 die Auftragsdatentabelle 61 (Fig. 7), eine Paketfachzuordnungstabelle 43 (Fig. 8) und eine Benutzertabelle 65 (Fig. 9). Es ist denkbar, dass einige der Daten in den Tabellen oder alle lokal in dem Paketautomaten 20 und/oder dem Paketautomaten 20' gespeichert sind. Des Weiteren können einige oder alle der Daten aus den genannten Tabellen in der Servicestellendatenbank 81 gespeichert sein. Redundanzen sind denkbar und in verschiedenen Anwendungsfällen gewünscht.

Fig. 4 zeigt ein erstes Ausführungsbeispiel eines erfindungsgemäßen Verfahrens. Hierbei tritt ein Benutzer, der beispielsweise ein defektes Gerät hat, über das Mobilfunktelefon 70 mit einem Servicestellenserver 80 in Verbindung. Beispielsweise kann er eine Internetseite aufrufen, sich dort authentifizieren und sein Problem angeben. Soweit der Servicestellenserver 80 feststellt, dass eine Reparatur des Geräts notwendig ist, wird er einen Serviceauftrag generieren und möglicherweise in der Servicestellendatenbank 81 speichern. Danach setzt er sich mit dem Versandserver 50 in Verbindung und übermittelt den Serviceauftrag zusammen mit einer Serviceauftragsnummer S-Nr, einer Mobilfunknummer Tel und einer Servicestellen-Identifikationsnummer S-ID an den Versandserver. Die Servicestellen-Identifikationsnummer S-ID kann dazu dienen, dass der Versandserver 50 die Servicestelle bzw. den Servicestellenserver 80 eindeutig identifizieren kann. Die Serviceauftragsnummer S-Nr kann für nachfolgende Transaktionen eine eindeutige Identifikation des Auftrags gewährleisten. Die übermittelte Mobilfunknummer Tel basiert auf einer Eingabe des Benutzers/Endkunden mit dem defekten Gerät. Erfindungsgemäß reicht die Mobilfunknummer Tel aus, um einen Rückversand des defekten Geräts an den Endkunden zu gewährleisten. Des Weiteren ermöglicht es die Mobilfunknummer Tel, dem Versandserver 50 mit dem Endkunden über das Mobilfunktelefon 70 unmittelbar in Verbindung zu treten. Die Mobilfunknummer Tel kann von dem Servicestellenserver 80 im Zuge der Problemmeldung (z.B. Meldung eines defekten Geräts) erfasst werden. In dem beschriebenen Ausführungsbeispiel kommuniziert der Benutzer zur Generierung des Serviceauftrags digital mit dem Servicestellenserver 80. Es ist jedoch ohne weiteres denkbar, dass der Benutzer eine Kundennummer anruft und dort mit einer Person die Situation bespricht, so dass die Person im Servicecenter bzw. an der Servicestelle den Serviceauftrag S für den Endkunden auslösen kann.

Nach dem Erhalt des Serviceauftrags S tritt der Versandserver 50 mit dem Endkunden unmittelbar in Verbindung. Dies kann beispielsweise über das SMS-Gateway 52 geschehen. Der Versandserver 50 generiert innerhalb einer Auftragsverwaltungseinrichtung 53 einen Authentifizierungscode A-Code. Dieser Authentifizierungscode A-Code kann einen Sicherheitscode sowie eine Prüfsumme enthalten.

In einem Ausführungsbeispiel handelt es sich bei dem Authentifizierungscode A-Code um einen zehnstelligen Code. Dieser Authentifizierungscode A-Code wird von dem Versandserver 50, genauer gesagt von der Auftragsverwaltungseinrichtung 53 per SMS an das Mobilfunktelefon 70 versandt. Der Endkunde empfängt diesen Authentifizierungscode A-Code, verpackt das defekte Gerät in ein Paket und begibt sich damit beispielsweise zu dem Paketautomaten 20. Am Paketautomaten 20 wählt der Endkunde einen Menüpunkt aus, der angibt, dass es sich bei dem nachfolgenden Prozess um die Abwicklung eines Serviceauftrags S handelt. Der Endkunde wird von dem Paketautomaten 20 aufgefordert, den entsprechenden Authentifizierungscode A-Code einzugeben. Der Endkunde gibt den entsprechenden Code ein, woraufhin der Paketautomat 20 diesen verifiziert. Soweit es sich um einen gültigen Code handelt, wird ein Paketfach 30 geöffnet, in das das Paket mit dem defekten Gerät eingelegt wird. Hieraufhin stellt das Versandsystem 2 sicher, dass das Paket an die Servicestelle, die durch die Servicestellen-Identifikationsnummer S-ID identifizierbar ist, geliefert wird. Die Servicestelle führt dann die Reparatur des Geräts durch und verpackt das reparierte Gerät danach. Für den Rückversand des Geräts an den Endkunden (zweiter Versand) wird eine Status-Aktualisierung UP ausgelöst, die der Servicestellenserver 80 an den Versandserver 50 übermittelt. Hieraufhin übermittelt der Versandserver den gespeicherten Authentifizierungscode A-Code, der auch bei dem ersten Versand verwandt wurde, an den Servicestellenserver 80, so dass dieser einen Aufkleber mit dem Authentifizierungscode A-Code generieren kann, der auf das Paket aufgeklebt wird. Die Status-Aktualisierung UP sorgt ebenfalls dafür, dass der Versandserver 50 weiß, dass das Paket mit dem Authentifizierungscode A-Code an den Endkunden zurückgesandt werden soll. Sobald dieses Paket an das Versandsystem 2 übergeben wurde, wird daher für den Rückversand gesorgt. Hierfür kann der Versandserver 50 beispielsweise eine erste Nachricht Msg1 an das Mobilfunktelefon 70 übersenden, die besagt, dass das reparierte Gerät in dem Paketautomaten 20 eingelagert wurde und dort zur Abholung bereitliegt.

In einem Ausführungsbeispiel kann es notwendig sein, dass der Endkunde für die Reparatur zahlen muss. Gegebenenfalls kann dies von dem Servicestellenserver 80 an den Versandserver 50 kommuniziert werden, so dass sich der Versandserver 50 um die Abwicklung des Zahlungsverkehrs kümmert. Beispielsweise kann der Paketautomat 20 eine Herausgabe des reparierten Geräts solange verweigern, bis eine entsprechende Bezahlung erfolgt ist.

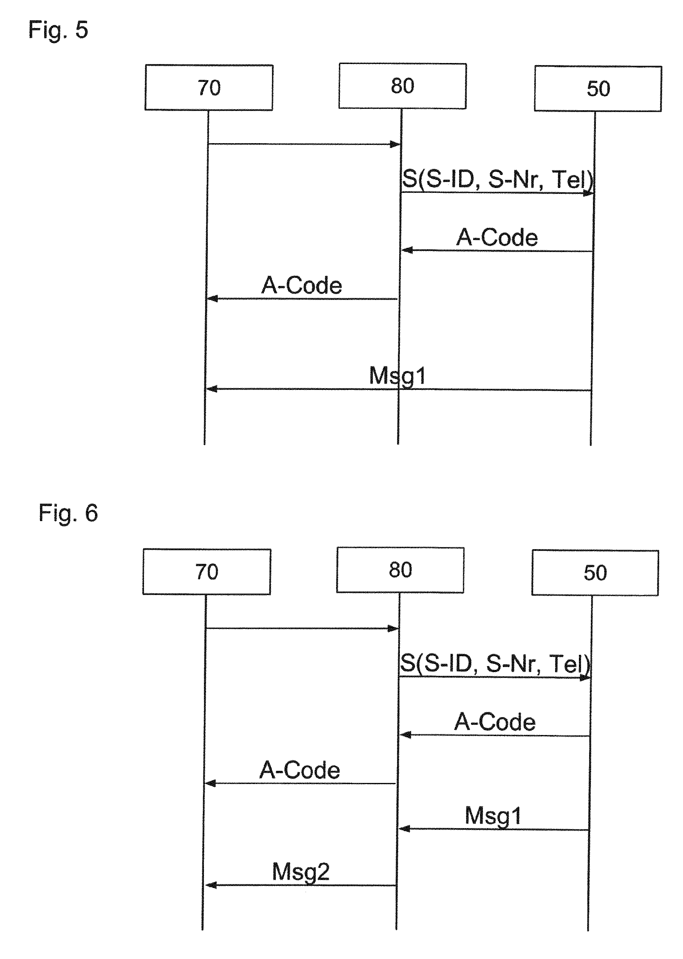

In einem alternativen Ausführungsbeispiel gemäß Fig. 5 wird wiederum ein Serviceauftrag S von einem Endkunden ausgelöst. Auch hier erfolgt eine Weiterleitung des Serviceauftrags S an den Versandserver 50. Jedoch tritt der Versandserver 50 nicht unmittelbar mit dem Endkunden bzw. dem Mobilfunktelefon 70 des Endkunden in Verbindung. Stattdessen wird der Authentifizierungscode A-Code an den Servicestellenserver 80 übermittelt und dort ggf. gespeichert. Der Servicestellenserver 80 leitet den Authentifizierungscode A-Code an das Mobilfunktelefon 70 weiter, so dass der Endkunde den ersten Versand auslösen kann. Nach einer Zustellung des defekten Geräts an die Servicestelle speichert der Versandserver 50 den Status dieses Serviceauftrags S. Im Endeffekt kann eine Statusnummer gespeichert werden, die angibt, dass der erste Versand abgeschlossen wurde. Die Servicestelle kann nun die Reparatur durchführen, das Gerät wieder verpacken und mit dem Authentifizierungscode A-Code kennzeichnen. Danach können Mitarbeiter der Servicestelle das Paket aufgeben. Da der Versandserver 50 den Status des Serviceauftrags S kennt, weiß er, dass nun der zweite Versand (Rückversand an den Endkunden) ansteht. Der Versandserver 50 kann nach der Einlagerung des Geräts in den Paketautomaten 20 wie auch bei dem ersten Ausführungsbeispiel eine erste Nachricht Msg1 an den Endkunden senden die besagt, dass das Gerät zur Abholung bereitsteht. Die erste Nachricht Msg1 kann Daten enthalten, die es dem Endkunden ermöglichen, sich an dem Paketautomaten 20 zu authentifizieren. In einem bevorzugten Ausführungsbeispiel erfolgt diese Authentifizierung anhand des Authentifizierungscodes A-Code, der bereits bei der Generierung des Serviceauftrags S erzeugt wurde.

In einem weiteren Ausführungsbeispiel (vgl. Fig. 6) kommuniziert der Versandserver nicht unmittelbar mit dem Mobilfunktelefon 70. Stattdessen wird eine erste Nachricht Msg1 an den Servicestellenserver 80 gesandt, die besagt, dass das Gerät nach dem zweiten Versand in ein Postfach 30 des Paketautomaten 20 eingelagert wurde. Die weitere Kommunikation erfolgt dann ausgehend von dem Servicestellenserver 80. Dieser kann beispielsweise eine zweite Nachricht an das Mobilfunktelefon 70 senden, die die vom Versandserver 50 erhaltenen Informationen enthält. Alternativ können zusätzliche oder andere Informationen mittels der zweiten Nachricht Msg2 an das Mobilfunktelefon 70 und somit an den Endkunden übermittelt werden.

Es ist offensichtlich, dass je nach dem gewählten Ausführungsbeispiel Daten zusätzlich oder ausschließlich bei dem Versandserver 50 und/oder dem Servicestellenserver 80 gespeichert werden müssen.

In einem Ausführungsbeispiel hält das Versandsystem 2 das Paket für den zweiten Versand solange zurück, bis der Endkunde eine konkrete Zieladresse vorgegeben hat. In diesem Ausführungsbeispiel kann eine erste Nachricht Msg1 an den Endkunden gesandt werden, die diesen auffordert, eine Zieladresse aus einer Vielzahl von Zieladressen auszuwählen. Sobald der Endkunde die Zieladresse ausgewählt und an den Versandserver 50 übermittelt hat, erfolgt der Versand. Mit einer zweiten Nachricht Msg2 wird der Endkunde dann darüber informiert, dass das Paket die ausgewählte Zieladresse, beispielsweise den Paketautomaten 20' erreicht hat und dort zur Abholung bereitliegt. Auch in diesem Ausführungsbeispiel kann der Endkunde bei der Abholung aufgefordert werden, sich zu authentifizieren. Eine entsprechende Authentifizierung kann an dem jeweiligen Paketautomaten 20, 20' erfolgen.

Die Fig. 7-9 zeigen exemplarische Datenstrukturen, die in der Versandserverdatenbank 60 gespeichert sein können. In einem Ausführungsbeispiel verfügt die Versandserverdatenbank 60 über eine Auftragsdatentabelle 61, wie diese in Fig. 7 gezeigt ist. Diese Auftragsdatentabelle 61 hat Spalten für das Speichern der Serviceauftragsnummer S-Nr, des Authentifizierungscode A-Code, der Servicestellen-Identifikationsnummer S-ID der Mobilfunktelefonnummer Tel und eines Status. Der in Fig. 7 gezeigte erste Tabelleneintrag gibt an, dass ein Serviceauftrag S mit der Servicenummer S-Nr "222" einen Authentifizierungscode A-Code "232" hat und von der Servicestelle mit der Servicestellennummer S-ID "1" ausgelöst wurde. Die dem Serviceauftrag S zugeordnete Mobilfunknummer lautet "12345" und der Status hat den Wert "1". Dieser Statuswert kann beispielsweise angeben, dass das Paket, das dem Serviceauftrag S zugeordnet ist, für den ersten Versand in ein Paketfach 30 eingelagert wurde und insofern für den Transport bereitliegt.

Der zweite Eintrag in der Auftragsdatentabelle 61 besagt, dass einem Serviceauftrag S mit der Serviceauftragsnummer "333" ein Authentifizierungscode A-Code "323" zugeordnet wurde. Dieser Serviceauftrag S wurde von einer Servicestelle mit der Servicestellennummer S-ID "2" generiert und gehört zu einem Endkunden mit der Mobilfunknummer Tel "23451". Der Status dieses Serviceauftrags S ist "2".

Demgemäß besagt der dritte Eintrag in der Auftragsdatentabelle 61, dass ein dritter Serviceauftrag S die Serviceauftragsnummer S-Nr "444" und den Authentifizierungscode A-Code "424" hat. Die Servicestellen-Identifikationsnummer S-ID ist für diesen Auftrag "3", die Mobilfunktelefonnummer Tel "345612" und der Status "3".

Die Versandserverdatenbank 60 kann des Weiteren eine Paketfachzuordnungstabelle 63 umfassen, wie diese in Fig. 8 gezeigt ist. Diese Paketfachzuordnungstabelle 63 ermöglicht es, einem bestimmten Serviceauftrag anhand des Authentifizierungscodes A-Code ein bestimmtes Paketfach 30 innerhalb eines bestimmten Paketautomaten 20, 20' zuzuordnen. Hierfür hat die Paketfachzuordnungstabelle 63 drei Spalten, nämlich eine Authentifizierungscode-Spalte mit der Bezeichnung "A-Code", eine Paketautomaten-Spalte mit der Bezeichnung "Paketautomaten-ID" und eine Paketfachnummern-Spalte mit der Bezeichnung "Paketfachnummer". Der erste Datensatz in der in Fig. 8 gezeigten Paketfachzuordnungstabelle 62 besagt, dass das Paket für den Serviceauftrag mit dem Authentifizierungscode A-Code "232" im ersten Paketautomat 20 und dort im Paketfach 30 mit der Paketfachnummer "1" eingelagert ist. Der zweite Datensatz besagt, dass der Serviceauftrag S mit dem Authentifizierungscode A-Code "323" in dem zweiten Paketautomaten 20' und dort im Paketfach 30 mit der Paketfachnummer "1" eingelagert ist.

Die Paketfachzuordnungstabelle 63 ermöglicht es dem Endkunden, Pakete aufzugeben, die keine Kennzeichnung, insbesondere keine Paket-Identifikationsnummer haben. Im Endeffekt muss der Endkunde beim Einlegen des Pakets lediglich den Authentifizierungscode A-Code angeben, der ihm vom Versandserver 50 und/oder vom Servicestellenserver 80 übermittelt wurde. Nach dem Einlegen des Pakets in ein bestimmtes Paketfach 30 speichert der Versandserver in der Paketfachzuordnungstabelle 83 in welches Paketfach 30 und in welchen Paketautomaten 20, 20' das jeweilige Paket eingelegt wurde. Ein Aufkleben einer eindeutigen Kennzeichnung des Pakets kann dann bei der Abholung des Pakets durch den Kurier erfolgen. Theoretisch ist es auch denkbar, dass das Paket bis zur Servicestelle ohne das Aufbringen einer entsprechenden Kennzeichnung transportiert wird. In einem bevorzugten Ausführungsbeispiel bringt der Kurier den Authentifizierungscode A-Code beim Entnehmen des Pakets aus dem jeweiligen Paketfach 30 an.

In dem beschriebenen oder einem weiteren Ausführungsbeispiel enthält die Versandserverdatenbank 60 eine Benutzertabelle 65, wie diese in Fig. 9 gezeigt ist. Diese Benutzertabelle 65 kann Spalten für die Angabe einer Benutzer-ID bzw. Kunden-ID "Nutzer-ID", eines Namens "Name", einer Mobilfunknummer ("Tel") und eines bevorzugten Paketautomaten "Paketautomaten-ID" umfassen. Die Einträge in der Benutzertabelle 65 können durch den Benutzer bzw. Endkunden selbst, durch das Versandsystem 2 und/oder den Servicestellenserver 80 vorgenommen werden. Die Benutzertabelle 65 kann dazu beitragen, für den zweiten Versand eine geeignete Zieladresse zu ermitteln. Beispielsweise kann der Versandserver 50 für den ersten Serviceauftrag S mit der Serviceauftragsnummer "222" anhand eines Abgleichs der Mobilfunknummern "Tel" ermitteln, dass der Benutzer Peter mit der Mobilfunknummer "12345" bevorzugt seine Pakete an dem Paketautomaten 20 erhalten möchte. Insofern kann eine automatische Auslieferung des Pakets im Zuge des zweiten Versands an den ersten Paketautomaten 20 erfolgen.

Dementsprechend gibt der zweite Datensatz der Benutzertabelle 65 an, dass der Benutzer Paul mit der Mobilfunknummer Tel "23451" bevorzugt seine Sendungen am zweiten Paketautomaten 20' erhält.

In einigen der beschriebenen Ausführungsbeispiele wird ein Barcode als Kennzeichnung für die Pakete bzw. Postsendungen verwendet. Es ist jedoch ohne Weiteres denkbar, eine andere Kennzeichnung, beispielsweise anhand eines QR-Codes, eines alphanumerischen Codes, usw. der Postsendungen vorzunehmen.

In einigen der beschriebenen Ausführungsbeispiele wird die Kennzeichnung mittels des Barcodescanners 29 erfasst. Theoretisch kann die Eingabe der Paket-Identifikationsnummer, insbesondere des Authentifizierungscodes A-Code, auch manuell oder über ein RFID-Lesegerät erfolgen.

An dieser Stelle sei darauf hingewiesen, dass alle oben beschriebenen Teile bzw. Komponenten für sich allein gesehen und ihrer Kombination als erfindungswesentlich beansprucht werden.

### Bezugszeichenliste

- 1: Netzwerk
- 2: Versandsystem
- 20, 20': Paketautomat
- 21: Eingabeeinrichtung
- 23: Ausgabeeinrichtung
- 25: Verarbeitungseinrichtung
- 27: Kommunikationseinrichtung
- 28: Speichereinrichtung
- 29: Barcodescanner
- 30: Paketfach
- 50: Versandserver
- 52: SMS-Gateway
- 53: Auftragsverwaltungseinrichtung
- 55: Server-Verarbeitungseinrichtung
- 57: Server-Kommunikationseinrichtung
- 60: Versandserverdatenbank
- 61: Auftragsdatentabelle
- 63: Paketfachzuordnungstabelle
- 65: Benutzertabelle
- 70: Mobilfunktelefon
- 80: Servicestellenserver
- 81: Servicestellenserver-Datenbank
- A-Code: Authentifizierungscode
- S: Serviceauftrag
- S-Nr: Serviceauftragsnummer
- Tel: Mobilfunknummer
- S-ID: Servicestellen-Identifikationsnummer
- UP: Status-Aktualisierung
- Msg1, Msg2: Elektronische Nachricht

## Patentansprüche

1. System für den Versand von Postsendungen, umfassend:
- mindestens eine Auftragsverwaltungseinrichtung (53) zum Empfangen einer Anfrage eines Servicesystems (80), zur Generierung eines ersten Versandauftrags und zur Generierung eines Authentifizierungscodes (A-Code) und/oder Aktivierung eines Authentifizierungscodes (A-Code);
- mindestens eine Kommunikationseinrichtung (52, 57) zur Übermittlung des Authentifizierungscodes (A-Code) an das Servicesystem (80) und/oder an einen Endkunden;
- eine Vielzahl von Paketautomaten (20, 20') mit mindestens einer Eingabeeinrichtung (21) und/oder Erfassungseinrichtung (29) zur Eingabe bzw. Erfassung des Authentifizierungscodes (A-Code) und einer Vielzahl von Paketfächern (30) zur Aufnahme eines Produkts, z.B. eines defekten elektronischen Geräts;
**dadurch gekennzeichnet, dass**
die Auftragsverwaltungseinrichtung (53) dazu ausgebildet ist, eine Auftragsaktualisierung (UP) zu Empfangen und in Reaktion auf die Auftragsaktualisierung (UP) einen zweiten Versandauftrag, insbesondere unter Verwendung des Authentifizierungscodes (A-Code), zu generieren.

2. System nach Anspruch 1,
**dadurch gekennzeichnet, dass**
die Anfrage eine E-Mailadresse und/oder eine Mobilfunknummer (Tel) umfasst, die vorzugsweise in Verbindung mit dem Authentifizierungscode (A-Code) und/oder der Anfrage in einer Speichereinrichtung (60, 81) gespeichert wird, und das System dazu ausgebildet ist, den Authentifizierungscode (A-Code) per Textnachricht und/oder per E-Mail an den Endkunden zu kommunizieren.

3. System nach einem der vorhergehenden Ansprüche,
**dadurch gekennzeichnet, dass**
das System dazu ausgebildet ist, eine Textnachricht (Msg1, Msg2) und/oder eine E-Mail an den Endkunden zu versenden, um diesen aufzufordern eine Zieladresse für den zweiten Versandauftrag einzugeben und die Zieladresse in Verbindung mit dem zweiten Versandauftrag zu speichern.

4. System nach einem der vorhergehenden Ansprüche,
**dadurch gekennzeichnet**, da**s**s
der Authentifizierungscode (A-Code) einen Serviceidentifikationscode und einen Sicherheitscode zur Prüfung der Authentizität des Authentifizierungscodes (A-Code) umfasst.

5. System nach einem der vorhergehenden Ansprüche, insbesondere nach Anspruch 4,
**dadurch gekennzeichnet, dass**
der Sicherheitscode eine Transaktionsnummer aus einer Vielzahl von vorab generierten Transaktionsnummern und/oder ein mittels eines Schlüssels durch das Servicesystem generierten Freigabecode umfasst.

6. System nach einem der vorhergehenden Ansprüche,
**dadurch gekennzeichnet, dass**
der Authentifizierungscode (A-Code) eine Prüfsumme zur Prüfung der Integrität des Authentifizierungscodes (A-Code) umfasst.

7. System nach einem der vorhergehenden Ansprüche,
**gekennzeichnet durch**
eine Validierungseinrichtung, die dazu ausgebildet ist, nach der Eingabe des Authentifizierungscodes (A-Code) an einer der Vielzahl von Paketautomaten (20, 20') den eingegebenen Authentifizierungscode (A-Code) zu validieren.

8. System nach einem der vorhergehenden Ansprüche, insbesondere nach Anspruch 7,
**dadurch gekennzeichnet, dass**
die Paketautomaten (20, 20') dazu ausgebildet sind,
a) in Abhängigkeit von einem Validierungsergebnis der Validierungseinrichtung, ein Paketfach (30) zum Einlegen des Produkts zu öffnen, und/oder
b) eine Zuordnung eines Paketfachs (30) zu dem ersten Versandauftrag und/oder zu dem Authentifizierungscode in einer Speichereinrichtung (60) zu speichern.

9. System nach einem der vorhergehenden Ansprüche,
**dadurch gekennzeichnet, dass**
die Paketautomaten (20, 20') dazu ausgebildet sind, eine Eingabe zu empfangen, die angibt, ob eine in ein Paketfach (30) eingelegte Postsendung mit einer Kennzeichnung mit einer Paketidentifikationskennung, beispielsweise dem Authentifizierungscode (A-Code), versehen ist, und diese Eingabe in Abhängigkeit von dem Paketfach (30) zu speichern.

10. System nach einem der vorhergehenden Ansprüche, insbesondere nach Anspruch 9,
**dadurch gekennzeichnet, dass**
das System dazu ausgebildet ist bzw. die Paketautomaten (20, 20') dazu ausgebildet sind, nach einer Authentifizierung eines Paketabholers, in einen Abholmodus für ungekennzeichnete Postsendungen überzugehen und mindestens ein Paketfach (30) zu ermitteln und zu öffnen, das eine Postsendung enthält, für das keine Zuordnung einer Paketidentifikationskennung zu einem Versandauftrag gespeichert ist.

11. System nach einem der vorhergehenden Ansprüche, insbesondere nach Anspruch 10,
**dadurch gekennzeichnet, dass**
das System dazu ausgebildet sind, nach dem Öffnen des mindestens einen Paketfachs (30) mit der Postsendung, für das keine Zuordnung einer Paketidentifikationskennung zu einem Versandauftrag gespeichert ist, die Paketidentifikationskennung, vorzugsweise per Erfassungseinrichtung, zu erfassen und dem Versandauftrag zuzuordnen.

12. System nach einem der vorhergehenden Ansprüche,
**gekennzeichnet durch**
eine Bezahleinrichtung zum Bezahlen einer Servicegebühr,
wobei das System dazu ausgebildet ist, den zweiten Versandauftrag erst dann freizugeben und/oder ein Paketfach (30), das dem zweiten Versandauftrag zugeordnet ist, nur dann zu öffnen, wenn eine der Anfrage und/oder dem ersten Versandauftrag und/oder dem zweiten Versandauftrag zugeordnete Servicegebühr bezahlt wurde.

13. Verfahren, insbesondere zur Ausführung auf einem System nach einem der
vorhergehenden Ansprüche, umfassend die Schritte:
a) Erfassung und Speichern eines Serviceauftrags (S) für ein Produkt, wobei der Serviceauftrag (S) Absenderdaten, insbesondere eine E-Mailadresse und/oder eine Mobilfunktelefonnummer (Tel), umfasst;
b) Generierung eines Authentifizierungscodes (A-Code) und/oder Zuordnung eines Authentifizierungscodes (A-Code) zu dem Serviceauftrag (S);
c) Entgegennahme des Produkts in einem ersten Paketfach (30);
d) Durchführung eines ersten Versands des Produkts gemäß einem ersten Versandauftrag;
e) Erfassung einer Durchführung des Serviceauftrags;
f) Generierung eines zweiten Versandauftrags unter Verwendung der Absenderdaten des Serviceauftrags (S);
g) Durchführung des zweiten Versandauftrags und Einlagerung des Produkts oder eines Ersatzprodukts in ein zweites Paketfach (30);
f) Übermittlung einer elektronischen Nachricht (Msg1, Msg2), insbesondere per Kurzmitteilung und/oder E-Mail, unter Verwendung der Absenderdaten, um einen Endkunden über die Einlagerung des Produkts oder eines Ersatzprodukts in das zweite Paketfach (30) zu informieren.

14. Verfahren nach Anspruch 13,
**gekennzeichnet durch**
ein Erfassen eines Authentifizierungscodes **durch** einen Paketautomaten (20, 20'), wobei der Schritt c) umfasst:
ein Verifizieren des erfassten Authentifizierungscodes (A-Code)und eine Entgegennahme nur dann, wenn der erfasste Authentifizierungscode (A-Code) valide ist.

15. Verfahren nach einem der Ansprüche 13 oder 14,
**gekennzeichnet durch**
ein Empfangen einer Eingabe, die angibt, ob eine in ein Paketfach (30) eingelegte oder noch einzulegende Postsendung mit einer Kennzeichnung mit einer Paketidentifikation versehen ist; und
ein Speichern dieser Eingabe in Abhängigkeit von dem Paketfach (30).

16. Computerlesbares Medium mit Instruktionen zur Implementierung des Verfahrens nach einem der Ansprüche 13 bis 15, wenn die Instruktionen ausgeführt werden.
